# EUROPÄISCHE PATENTSCHRIFT

(11) **EP 4 025 401 B1**
(45) Veröffentlichungstag und Bekanntmachung des Hinweises auf die Patenterteilung: **31.01.2024**
(21) Anmeldenummer: 20817329.4
(22) Anmeldetag: 02.12.2020
(51) Int. Cl.: B29B 7/00, B29B 7/88, B29B 7/90, B29B 7/92, B29C 48/285, B29B 17/00, B29B 17/04, B29C 48/16, B29C 48/275, B29C 48/49, B29B 7/38, B29K 101/10, B29K 105/06

(54) **VERFAHREN ZUR HERSTELLUNG VON EXTRUDIERTEN PANEELEN, UND EXTRUDIERTES PANEEL**
METHOD FOR PRODUCING EXTRUDED PANELS, AND EXTRUDED PANEL
PROCÉDÉ DE FABRICATION DE PANNEAUX EXTRUDÉS, ET PANNEAU EXTRUDÉ

(30) Priorität: 04.12.2019 DE 102019133052
(43) Veröffentlichungstag der Anmeldung: 13.07.2022
(73) Patentinhaber: Novo-Tech GmbH & Co. KG, 06449 Aschersleben (DE)
(72) Erfinder: SASSE, Holger, 06449 Aschersleben (DE)
(74) Vertreter: Dantz, Jan Henning
(86) Internationale Anmeldenummer: PCT/EP2020/084255
(87) Internationale Veröffentlichungsnummer: WO 2021/110740

(56) Entgegenhaltungen:
- EP-A1- 1 386 707
- EP-A1- 2 772 352
- DE-A1-102011 052 048
- DE-B3-102006 045 226
- US-A- 5 215 695
- US-A1- 2005 112 226
- US-A1- 2006 006 564
- US-A1- 2009 115 101

## Beschreibung

Die vorliegende Erfindung betrifft ein Verfahren zur Herstellung von extrudierten Paneelen als Wand- oder Bodenbelag.

Die EP 2 101 983 B1 offenbart ein Verfahren zur Herstellung von extrudierten Paneelen, bei dem eine Mischung aus Holzpartikeln und/oder anderen Pflanzenpartikeln mit Kunststoff erzeugt wird. Dabei werden die Holzpartikel über ein Füllteil in einen Planetwalzenextruder eingetragen und Kunststoff in Granulatform über einen Nebenextruder aufgeschmolzen und als Schmelze in den Planetwalzenextruder eingetragen. Die so hergestellte Mischung wird dann verdichtet und über eine Extrusionsdüse ausgegeben. Dieses Verfahren hat sich bewährt, wobei der Bedarf an Holz- oder Pflanzenpartikeln erheblich ist, weil deren Anteil über 60 Gew.-% beträgt.

Solche extrudierten Paneele werden insbesondere als Wand- oder Bodenbelag eingesetzt, wie dies beispielsweise in der EP 2 734 685 B1 offenbart ist. Die extrudierten Paneele können im Außenbereich eingesetzt werden, da diese witterungsbeständig sind.

Für eine optisch ansprechende Ausgestaltung kann die Oberfläche der extrudierten Paneele über mehrere Hobel profiliert werden, wie dies beispielsweise in der EP 2 514 575 B1 offenbart ist.

Die US 2006/0006564 A1 offenbart eine Aufarbeitung von faserverstärkten Kunststoffmaterialien. Hierfür wird Zellulosematerial mit einem Plastikmaterial verkapselt. Dabei wird angenommen, dass das Zellulosematerial geschmolzenen Kunststoff absorbiert. In einem zweiten Aspekt des Verfahrens wird das verkapselte Zellulosematerial mit andernfalls inkompatiblen Thermoplasten kombiniert. Für den zweiten Schritt wird Kunststoffmüll genutzt, welcher zusätzlich zu thermoplastischen Anteilen auch nicht-schmelzbare Anteile, z.B. Glasfasern, Duromere, Asbest und dergleichen umfasst. Dieser Müll wird geschmolzen. Dann werden die beschichteten zellulosehaltigen Materialien von den nicht-schmelzbaren Kunststoffe und die nicht-schmelzbaren Verbindungen abgetrennt. So können thermoplastische Materialien an der Schmelze anhaften und mit dieser abgetrennt, z.B. abgeschöpft werden, während die nicht-schmelzbaren Anteile sich absetzen und zurückbleiben. Nur das geschmolzene an der Zellulose anhaftende Material wird somit weiterverarbeitet. Die duroplastischen Anteile oder Glasfasern des eingesetzten Mülls verbleiben weiterhin Abfall und werden nicht einem zweiten Lebenszyklus zugeführt.

Die EP 2 772 352 A1 offenbart die Aufarbeitung eines duroplast-haltigen Holzfaserwerkstoffes mit einem thermoplastischen Kunststoff. Die Holzfasern sind hier bereits Bestandteil des Verbundwerkstoffes und ins Material eingebunden. Es ist daher Aufgabe der vorliegenden Erfindung, ein Verfahren zur Herstellung von extrudierten Paneelen bereitzustellen, das umweltfreundlich ausgestaltet ist und einen geringeren Anteil an Rohstoffen erfordert.

Diese Aufgabe wird mit einem Verfahren mit den Merkmalen des Anspruches 1 gelöst. Weitere bevorzugte Ausführungen werden in den abhängigen Ansprüchen beansprucht.

Bei dem erfindungsgemäßen Verfahren werden lignozellulosehaltige Fasern und ein Polymermaterial aus einem thermoplastischen Material bereitgestellt, und zusätzlich wird ein rezykliertes Kunststoffverbundmaterial aus einem duroplastischen Material zerkleinert. Solche duroplastischen Materialien können nicht für die Extrusion wieder aufgeschmolzen werden und werden daher in der Regel nicht bei der Extrusion eingesetzt. Das Kunststoffverbundmaterial kann dabei unterschiedliche Materialien enthalten und muss nur überwiegend aber nicht vollständig aus einem duroplastischen Kunststoff bestehen. Anschließend wird eine Mischung aus den lignozellulosehaltigen Fasern, dem Polymermaterial aus einem thermoplastischen Material und dem zerkleinerten rezyklierten Kunststoffverbundmaterial aus einem duroplastischen Material sowie optional weiteren Zusatzstoffen hergestellt, um diese Mischung dann zu extrudieren und extrudierte Paneele herzustellen. Durch den Einsatz eines Anteils an rezykliertem Kunststoffverbundmaterial mit duroplastischem Kunststoff in der Mischung kann der Rohstoffbedarf bezüglich der lignozellulosehaltigen Fasern und dem Polymermaterial gesenkt werden, was zu einer besseren Umweltbilanz führt.

Das rezyklierte Kunststoffverbundmaterial kann aus Kunststoffabfällen gewonnen werden, wie diese beispielsweise in der DIN EN 15347:2008 charakterisiert sind. Für viele Kunststoff-Rezyklate bestehen einschlägige Normen. PP-Rezyklate werden in DIN EN 15345:2008 und PE-Rezyklate werden in DIN EN 15344:2008 charakterisiert. Für PET-Kunststoff-Rezyklate ist die DIN EN 15353:2007 heranzuziehen und PS-Rezyklate werden in DIN EN 15342:2008 beschrieben. PVC-Rezyklate sind in DIN EN 15346:2015 charakterisiert. Im Hinblick auf die Definition von Kunststoffrezyklaten im Sinne der vorliegenden Anmeldung wird auf die Definition in den obigen Normen verwiesen.

Lignozellulosehaltige Fasern im Sinne der vorliegenden Anmeldung können aus Holz oder Pflanzen, wie Bambus, gewonnen werden. Solche lignozellulosehaltigen Fasern werden zerkleinert und können dann in ein Füllteil eines Extruders, beispielsweise eines Planetwalzenextruders, eingegeben werden. Durch den Einsatz von lignozellulosehaltige Fasern kann Reststoff aus dem rezyklierten Verbundmaterial besser gebunden werden, beispielweise wenn dieser Formaldehyd und/oder freie Harze, insbesondere formaldehydhaltige Harze, enthalten.

Weiterhin vorteilhaft kann der Ligningehalt pro kg lignozellulose Fasern (bezogen auf deren Trockenmasse) vorteilhaft zumindest mehr als 20 Gew.%, vorzugsweise zwischen 25-40 Gew.% liegen.

Als Polymermaterial wird erfindungsgemäß ein Granulat aus einem extrudierbaren thermoplastischen Kunststoff eingesetzt, beispielsweise Polyethylen (PE), Polystyrol (PS), Polyurethan (PU) und/oder Polypropylen (PP) oder Mischungen davon.

Vorzugsweise beträgt der Anteil an zerkleinertem rezykliertem Kunststoffverbundmaterial aus einem duroplastischen Kunststoff zwischen 5 Gew.-% bis 50 Gew.-%, insbesondere 10 Gew.-% bis 40 Gew.-%. Dadurch lässt sich der Bedarf an Rohstoffen für die Herstellung der extrudierten Paneele erheblich senken.

Das zerkleinerte rezyklierte Kunststoffmaterial aus einem duroplastischen Kunststoff kann in Körner mit einer Größe zwischen 10 µm bis 20 mm, insbesondere 20 µm bis 10 mm, geschreddert werden. Die geschredderten Körner des rezyklierten Kunststoffverbundmaterials können dann über einen Nebenextruder oder einen Seitenarmextruder gefördert werden, um diese mit den anderen Bestandteilen zu mischen. Dabei kann das zerkleinerte Kunststoffverbundmaterial, soweit möglich erweicht und zu der Mischung zugegeben werden. Die Zugabe des zerkleinerten Kunststoffverbundmaterials kann dabei unmittelbar über einen Seitenextruder oder über einen Zwischenschritt einer Granulatherstellung erfolgen.

In einer bevorzugten Ausgestaltung wird das zerkleinerte rezyklierte Kunststoffverbundmaterials mit dem duroplastischen Material unter Zugabe eines Polyolefins zu einem Granulat verarbeitet, und dieses Granulat wird dann beim Extrudieren zugeführt. Dieser zweistufige Prozess hat den Vorteil, dass bei der Verarbeitung des Granulates eine Staubbildung vermieden oder verringert wird, die bei der Verarbeitung des zerkleinerten Kunststoffverbundmaterials zu Problemen führen kann. Dabei kann der Anteil an zerkleinertem rezyklierten Verbundmaterial zur Herstellung des Granulates zwischen 50 Gew.-% bis 95 Gew.-%, insbesondere zwischen 70 Gew.-% bis 90 Gew.-% betragen, so dass der Anteil an Polyolefin geringer ist als der Anteil an zerkleinertem Kunststoffmaterial. Das Granulat kann beispielsweise durch Extrusion und Schneiden des gemischten Materials hergestellt werden. Das Granulat kann ein deutlich größeres Volumen besitzen als das zerkleinerte Verbundmaterial vor der Granulatherstellung, beispielsweise mindestens das zehnfache Volumen.

Das rezyklierte Kunststoffverbundmaterial ist vorzugsweise ein faserverstärktes Kunststoffmaterial, kurz FKV genannt, mit einem ausgehärteten Duroplast, wobei der Anteil an ausgehärteten duroplastischen Kunststoff bevorzugt über 60 Gew.-% beträgt. Als Fasern können insbesondere Glasfasern, Kohlenstofffasern, Asbestfasern und Polymerfasern, insbesondere Fasern aus harten Kunststoffen, wie Polyethylen und/oder Aramid, verwendet werden, die bei der thermischen Verwertung des Kunststoffverbundmaterials häufig wegen der anfallenden Schadstoffe im Abgas problematisch sind. Bei dem erfindungsgemäßen Verfahren werden diese Zusatzstoffe jedoch der Mischung zugefügt und können dann zu einer verbesserten Festigkeit der extrudierten Paneele beitragen. Durch die Extrusion kommt es zu einer Replastifizierung und zu einer optimierten Verteilung der Verbundmaterials in dem extrudierten Paneel.

Als bevorzugtes rezykliertes Kunststoffverbundmaterial aus einem duroplastischen Kunststoff werden Rotorflügel aus Windkraftanlagen eingesetzt, die aus einem homogenen Material mit großem Volumen verwertet werden können. Die Rotorflügel werden vorzugsweise über einen Schredder zerkleinert und dann dem Extruder zugegeben.

Das zerkleinerte rezyklierte Kunststoffverbundmaterial kann Anteile von Polyester, Epoxidharz, Phenolharz und/oder Melaminharz enthalten. Diese Anteile können bei der Herstellung der Mischung in zerkleinerter Form den übrigen Bestandteilen der Mischung zuzugeben.

Das Verfahren zur Herstellung von extrudierten Paneelen als Wand- oder Bodenbelag wird vorzugsweise mit einer Extrusionsanlage durchgeführt, wie sie beispielsweise in der EP 2 101 983 B1 offenbart ist, wobei zusätzlich ein Nebenextruder oder Seitenarmextruder für das zerkleinerte rezyklierte Kunststoffverbundmaterial eingesetzt wird. Nach dem Herstellen der Mischung und Extrudieren der Paneele können diese noch abgekühlt und nachbearbeitet werden, beispielsweise durch Bürsten oder Hobel, die die Oberfläche der Paneele gestalten.

Die so hergestellten extrudierten Paneele weisen eine sehr geringe Wasseraufnahme auf.

Die erfindungsgemäß extrudierten Paneele können auf gleiche Weise mehrfach analog zur vorbeschriebenen Weise recycliert werden, wobei stets eine Replastifizierung in einem gewissen Umfang beobachtet wurde.

## Patentansprüche

1. Verfahren zur Herstellung von extrudierten Paneelen als Wand- oder Bodenbelag mit den folgenden Schritten:
- Bereitstellen von lignozellulosehaltigen Fasern;
- Bereitstellen eines Polymermaterials aus einem thermoplastischen Material als ein Granulat aus einem extrudierbaren thermoplastischen Kunststoff;
- Zerkleinern eines rezyklierten Kunststoffverbundmaterials aus einem duroplastischen Material, wobei das rezyklierte Kunststoffverbundmaterial ein faserverstärktes Kunststoffmaterial mit Glasfasern, Kohlenstofffasern, Asbestfasern und/oder Polymerfasern ist;
- Herstellen einer Mischung aus den lignozellulosehaltigen Fasern, dem Polymermaterial mit einem thermoplastischen Material, dem zerkleinerten rezyklierten Kunststoffverbundmaterial und optional weiteren Zusatzstoffen, und
- Extrudieren der Mischung und Fertigstellen der Paneele.

2. Verfahren nach Anspruch 1, **dadurch gekennzeichnet, dass** der Anteil an zerkleinertem rezyklierten Verbundmaterial zwischen 5 Gew.-% bis 50 Gew.-%, insbesondere 10 Gew.-% bis 40 Gew.-%, beträgt.

3. Verfahren nach Anspruch 1 oder 2, **dadurch gekennzeichnet, dass** das zerkleinerte rezyklierten Kunststoffverbundmaterial zu Körnern mit einer Größe von kleiner 20 mm, insbesondere zwischen 20 µm bis 10 mm, geschreddert wird.

4. Verfahren nach einem der vorhergehenden Ansprüche, **dadurch gekennzeichnet, dass** das zerkleinerte rezyklierte Kunststoffverbundmaterials mit dem duroplastischen Material unter Zugabe eines Polyolefins zu einem Granulat verarbeitet wird, und das Granulat dann beim Extrudieren zugeführt wird.

5. Verfahren nach Anspruch 4, **dadurch gekennzeichnet, dass** der Anteil an zerkleinertem rezyklierten Verbundmaterial zur Herstellung des Granulates zwischen 50 Gew.-% bis 95 Gew.-%, insbesondere zwischen 70 Gew.-% bis 90 Gew.-% beträgt.

6. Verfahren nach einem der vorhergehenden Ansprüche, **dadurch gekennzeichnet, dass** der Ligningehalt pro kg lignozellulose Fasern (bezogen auf deren Trockenmasse) bei zumindest mehr als 20 Gew.%, vorzugsweise zwischen 25-40 Gew.%, liegt.

7. Verfahren nach einem der vorhergehenden Ansprüche, **dadurch gekennzeichnet, dass** das rezyklierte Kunststoffverbundmaterial ein faserverstärktes Kunststoffmaterial mit Glasfasern ist.

8. Verfahren nach einem der vorhergehenden Ansprüche, **dadurch gekennzeichnet, dass** das rezyklierte Kunststoffverbundmaterial aus Rotorflügeln von Windkraftanlagen gewonnen wird.

9. Verfahren nach einem der vorhergehenden Ansprüche, **dadurch gekennzeichnet, dass** als Polymermaterial Polypropylen und/oder Polyethylen eingesetzt wird.

10. Verfahren nach einem der vorhergehenden Ansprüche, **dadurch gekennzeichnet, dass** das rezyklierte Kunststoffverbundmaterial ein Polyester, Epoxidharz, Phenolharz und/oder ein Melaminharz enthält.

## Claims

1. Method for producing extruded panels as wall or floor coverings, comprising the following steps:
- providing lignocellulosic fibers;
- providing a polymeric material of a thermoplastic material as a granule of an extrudable thermoplastic material;
- comminuting a recycled plastic composite material from a thermosetting material, wherein the recycled plastic composite material is a fiber-reinforced plastic material comprising glass fibers, carbon fibers, asbestos fibers, and/or polymer fibers;
- preparing a mixture of the lignocellulosic fibers, the polymeric material with a thermoplastic material, the comminuted recycled plastic composite material, and optionally other additives; and
- extruding the mixture and finishing the panels.

2. Method according to claim 1, **characterized in that** the proportion of comminuted recycled composite material is between 5% by weight to 50% by weight, in particular 10% by weight to 40% by weight.

3. Method according to claim 1 or 2, **characterized in that** the comminuted recycled plastic composite material is comminuted to grains with a size smaller than 20 mm, in particular between 20 µm to 10 mm.

4. Method according to one of the preceding claims, **characterized in that** the comminuted recycled plastic composite material is processed with the thermosetting material with the addition of a polyolefin to form granules, and the granules are then fed during extrusion.

5. Method according to claim 4, **characterized in that** the proportion of comminuted recycled composite material used to produce the granules is between 50% by weight and 95% by weight, in particular between 70% by weight and 90% by weight.

6. Method according to one of the preceding claims, **characterized in that** the lignin content per kg of lignocellulosic fibers (based on their dry matter) is at least more than 20% by weight, preferably between 25-40% by weight.

7. Method according to one of the preceding claims, **characterized in that** the recycled plastic composite material is a fiber-reinforced plastic material with glass fibers.

8. Method according to one of the preceding claims, **characterized in that** the recycled plastic composite material is obtained from rotor blades of wind turbines.

9. Method according to one of the preceding claims, **characterized in that** polypropylene and/or polyethylene is used as the polymer material.

10. Method according to one of the preceding claims, **characterized in that** the recycled plastic composite material contains a polyester, epoxy resin, phenolic resin and/or a melamine resin.

## Revendications

1. Procédé pour la fabrication de panneaux extrudés servant de revêtement mural ou de revêtement de sol, qui comprend les étapes suivantes :
- préparation de fibres contenant de la lignocellulose ;
- préparation d'un matériau polymère à partir d'une matière thermoplastique faite de granulés en matière thermoplastique extrudable ;
- broyage d'une matière plastique composite recyclée faite d'une matière plastique thermodurcissable, la matière plastique composite recyclée étant une matière plastique armée de fibres contenant des fibres de verre, des fibres de carbone, des fibres d'amiante et/ou des fibres de polymère ;
- production d'un mélange avec les fibres contenant de la lignocellulose, le matériau polymère contenant une matière thermoplastique, la matière plastique composite recyclée broyée et, facultativement, d'autres additifs, et
- extrusion du mélange et finalisation des panneaux.

2. Procédé selon la revendication 1, **caractérisé en ce que** la proportion de matière plastique composite recyclée broyée est comprise entre 5 % en poids et 50 % en poids, en particulier entre 10 % en poids et 40 % en poids.

3. Procédé selon la revendication 1 ou 2, **caractérisé en ce que** la matière plastique composite recyclée broyée est déchiquetée en grains d'une grosseur inférieure à 20 mm, en particulier comprise entre 20 µm et 10 mm.

4. Procédé selon l'une des revendications précédentes, **caractérisé en ce que** la matière plastique composite recyclée broyée est travaillée avec la matière plastique thermodurcissable en ajoutant une polyoléfine pour obtenir des granulés et les granulés sont ensuite amenés à l'extrusion.

5. Procédé selon la revendication 4, **caractérisé en ce que** la proportion de matière plastique composite recyclée broyée dans la fabrication des granulés est comprise entre 50 % en poids et 95 % en poids, en particulier entre 70 % en poids et 90 % en poids.

6. Procédé selon l'une des revendications précédentes, **caractérisé en ce que** la teneur en lignine par kilogramme de fibres de lignocellulose (rapportée à la masse sèche de celles-ci) est au moins supérieure à 20 % en poids, de préférence comprise entre 25 % et 40 % en poids.

7. Procédé selon l'une des revendications précédentes, **caractérisé en ce que** la matière plastique composite recyclée est une matière plastique armée de fibres contenant des fibres de verre.

8. Procédé selon l'une des revendications précédentes, **caractérisé en ce que** la matière plastique composite recyclée est obtenue à partir de pales de rotor de génératrices éoliennes.

9. Procédé selon l'une des revendications précédentes, **caractérisé en ce que** le matériau polymère utilisé est du polypropylène et/ou du polyéthylène.

10. Procédé selon l'une des revendications précédentes, **caractérisé en ce que** la matière plastique composite recyclée contient un polyester, une résine époxy, une résine phénolique et/ou une résine mélamine.
